(19) Europäisches Patentamt
European Patent Office
Office européen des brevets

(11) EP 4 039 734 B1

(12) EUROPEAN PATENT SPECIFICATION

(45) Date of publication and mention of the grant of the patent:
**15.07.2026 Bulletin 2026/29**

(21) Application number: **20871362.8**

(22) Date of filing: **28.09.2020**

(51) International Patent Classification (IPC):
***C08J 5/00** (2006.01)* ***C08J 5/04** (2006.01)*
***C08L 71/12** (2006.01)* ***C08L 81/06** (2006.01)*
***C08G 73/10** (2006.01)*

(52) Cooperative Patent Classification (CPC):
(C-Sets available)
**C08G 75/23; C08G 65/4056; C08G 73/1053; C08G 73/1071; C08J 5/046; C08L 71/10;**
C08J 2371/10 (Cont.)

(86) International application number:
**PCT/KR2020/013175**

(87) International publication number:
**WO 2021/066438 (08.04.2021 Gazette 2021/14)**

(54) **POLYMER COMPOSITE MATERIAL COMPRISING ARAMID NANOFIBER, AND METHOD FOR PREPARING SAME**

POLYMERVERBUNDSTOFF MIT ARAMID-NANOFASER UND VERFAHREN ZU DESSEN HERSTELLUNG

MATÉRIAU COMPOSITE DE POLYMÈRE COMPRENANT UNE NANOFIBRE D'ARAMIDE ET PROCÉDÉ POUR LA PRÉPARATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2019 KR 20190122224**
**25.09.2020 KR 20200124387**

(43) Date of publication of application:
**10.08.2022 Bulletin 2022/32**

(73) Proprietor: **Korea Research Institute of Chemical Technology**
**Daejeon 34114 (KR)**

(72) Inventors:
- **HWANG, Sung Yeon**
**Daejeon 34114 (KR)**
- **PARK, Jeyoung**
**Daejeon 34114 (KR)**
- **OH, Dong Yeop**
**Daejeon 34114 (KR)**
- **JEON, Hyeon Yeol**
**Daejeon 34114 (KR)**
- **PARK, Seul A**
**Daejeon 34114 (KR)**
- **EOM, Young Ho**
**Daejeon 34114 (KR)**

(74) Representative: **Kraus & Lederer PartGmbB et al**
**Thomas-Wimmer-Ring 15**
**80539 München (DE)**

(56) References cited:
**WO-A1-2015/127115** **WO-A1-2018/185440**
**JP-A- 2009 051 890** **JP-A- 2018 141 051**
**KR-A- 20080 077 617** **KR-A- 20150 061 983**
**KR-A- 20160 026 831** **US-A1- 2013 288 050**

- **KUANG QINGXIA, ZHANG DAN, YU JAE CHUL, CHANG YOUNG-WOOK, YUE MINGLI, HOU YING, YANG MING: "Toward Record-High Stiffness in Polyurethane Nanocomposites Using Aramid Nanofibers", THE JOURNAL OF PHYSICAL CHEMISTRY C, vol. 119, no. 49, 9 November 2015 (2015-11-09), pages 27467 - 27477, XP055797241, ISSN: 1932-7447, DOI: 10.1021/acs.jpcc.5b08856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/10, C08L 77/10**

## Description

### [Technical Field]

The present invention relates to a polymer composite material including an aramid nanofiber (ANF) and a method of producing the same. More particularly, the present invention relates to an arylene ether-based polymer composite material or an arylene ether imide-based polymer composite material including an aramid nanofiber, and a method of producing the same.

### [Background Art]

An arylene ether-based or arylene ether imide-based polymer is known to have excellent flame retardancy, thermal resistance, and chemical resistance, and is applied to sockets of electronic devices, engine parts, aviation materials, military materials, membranes, and the like.

In order to apply the arylene ether-based polymer or the arylene ether imide-based polymer to plastics for high-tech industries, the polymer should be light and have high thermal resistance and high mechanical strength, and thus, the arylene ether-based or arylene ether imide-based polymer is produced with a nanofiller such as a carbon fiber or a glass fiber.

However, when the arylene ether-based polymer or arylene ether imide-based polymer composite material is produced using a glass fiber or a carbon fiber, the glass fiber or the carbon fiber should be used in a content more than necessary for imparting sufficient mechanical strength, and in this case, strength may be improved, but problems in processability and surface smoothness appear.

In addition, when an aramid bulk fiber produced by preparing a dopant with a sulfuric acid solution and performing spinning is mixed with a polymer, it is difficult to obtain expected improvement of the physical properties, and thus, a study for solving the problems have been consistently conducted.

Furthermore, when a conventional fiber is mixed, a tensile strength is increased, but a tensile elongation is decreased.

Therefore, though the composite material is produced by adding a fiber, there is a need to develop a new polymer composite material having both an increased tensile strength and an increased tensile elongation which could not be obtained before, and moreover, development of a composite material having more significantly increased tensile strength and tensile elongation increase rates has been requested.

Conventionally, when the tensile strength is improved by fiber compositeness, it was difficult to solve a problem of a tensile elongation decrease, and there is a need to develop a method of producing a polymer composite material having both high physical properties showing opposite characteristics such as a tensile strength and a tensile elongation.

JP 2009 051890 discloses an aramide nanocomposite comprises an aliphatic polyimide and/or a precursor thereof as a matrix, and an organic solvent-soluble aromatic polyamide having compatibility to an aliphatic imide that is the precursor of the aliphatic polyimide as a reinforcing fiber molecule.

WO 2015/127115 A1 relates to a free standing film, comprising alternating layers of aramid nanofibers (ANF) and polyalkylene oxide.

US 2013/288050 A1 discloses aramid nanofibers of diameter 3 to 100 nm as well as a suspension comprising aramid nanofibers and an aprotic solvent, wherein the nanofibers have a diameter of 3 to 100 nm and the length of 0.1 to 10 micrometers.

### [Disclosure]

### [Technical Problem]

An object of the present invention is to provide a composite material having both an increased tensile strength and an increased tensile elongation by fiber compositeness.

Another object of the present invention is to provide a new composite material having a tensile strength increase rate and a tensile elongation increase rate which are more significantly increased by fiber compositeness.

### [Technical Solution]

As a result of conducting a study for achieving the object, the present inventors found that an arylene ether-based polymer or an arylene ether imide-based polymer is added to a polar aprotic solution in which an aramid nanofiber is dispersed and solution blending is performed to produce a composite material, or a monomer is added to produce a composite material by an in-situ method, thereby significantly increasing mechanical physical properties even in the case

of using a significantly small amount of the aramid fiber, for example, using a content of 0.01 to 2 wt% of the aramid fiber with respect to an entire composite material, and completed the present invention. More specifically, the present inventors found that a composite material having both an increased tensile strength and a tensile elongation, which is decreased by fiber compositeness but is increased in this case, and completed the present invention.

That is, an arylene ether-based polymer or an arylene ether imide-based polymer is dissolved in a polar aprotic solution in which an aramid nanofiber prepared according to the preparation method of an aramid nanofiber dispersion of Korean Patent Application No. 10-2018-0057585 (May 21, 2018) previously filed by the present applicant is dispersed to produce a composite material, or a monomer is added to the solution in which the aramid nanofiber is dispersed to produce a composite material by an in-situ method, thereby producing an aramid nanofiber-arylene ether-based or arylene ether imide-based polymer composite material having unexpectedly improved mechanical physical properties.

In one general aspect, a method of producing a polymer composite material by a solution blending method includes: adding an arylene ether-based polymer or an arylene ether imide-based polymer to a nanofiber dispersion in which an aramid nanofiber is dispersed in a polar aprotic solvent and dissolving the polymer therein.

In another general aspect, a method of producing a polymer composite material by an in-situ method includes: mixing a monomer for preparing an arylene ether-based polymer or an arylene ether imide-based polymer with a nanofiber dispersion in which an aramid nanofiber is dispersed in a polar aprotic solvent and performing polymerization.

In still another general aspect, a polymer composite material includes: an aramid nanofiber in a polymer selected from an arylene ether-based polymer or arylene ether imide-based polymer, wherein the composite material has a tensile strength increase rate according to the following Calculation Formula 1 of 110% or more and a tensile elongation increase rate according to the following Calculation Formula 2 of 110% or more:

[Calculation Formula 1]

$$\frac{TS_1}{TS_0} \times 100$$

wherein $T_{S0}$ is a tensile strength (MPa) of an arylene ether-based polymer or an arylene ether imide-based polymer including no aramid nanofiber, and $T_{S1}$ is a tensile strength (MPa) of a composite material including the aramid nanofiber, the tensile strength being measured in accordance with ASTM D 638,

[Calculation Formula 2]

$$\frac{Te_1}{Te_0} \times 100$$

wherein $T_{e0}$ is a tensile elongation (%) of an arylene ether-based polymer or an arylene ether imide-based polymer including no aramid nanofiber, and $T_{e1}$ is a tensile elongation (%) of a composite material including the aramid nanofiber, the tensile elongation being measured in accordance with ASTM D 638.

**[Advantageous Effects]**

The polymer composite material according to the present invention has the aramid nanofiber evenly dispersed therein and has an effect of increasing both a tensile strength and a tensile elongation.

Specifically, the composite material may achieve a tensile strength increase rate of 110% or more, 120% or more, 130% or more, preferably 170% or more, and more preferably 200% or more, and a tensile elongation increase rate of 110% or more, 120% or more, 130% or more, 140% or more, 150% or more, and very preferably 200% or more.

Usually, the fiber-dispersed composite material has an increased tensile strength but a decreased tensile elongation; however, in the present invention, a composite material is produced using a nanofiber dispersion in which an aramid nanofiber is dispersed in a polar aprotic solvent, thereby achieving an effect of increasing both a tensile strength and a tensile elongation. In addition, the increase degree is remarkable.

For example, the arylene ether-based composite material produced by the in-situ method may have the tensile elongation increase rate of 150% or more, preferably 170% or more, and more preferably 200% or more, thereby achieving excellent mechanical physical properties.

**[Description of Drawings]**

The above and other objects, features and advantages of the present invention will become apparent from the following description of preferred embodiments given in conjunction with the accompanying drawings, in which:
FIG. 1 is a tensile graph of an arylene ether-based polymer specimen obtained in Comparative Example 1 and Example 5, for comparison of a physical property enhancement effect of an aramid nanofiber.

**[Best Mode]**

Hereinafter, the present invention will be described in more detail with reference to specific examples and exemplary embodiments including the accompanying drawings. However, the following exemplary embodiments are only a reference for describing the present invention in detail, and the present invention is not limited thereto, and may be implemented in various forms.

In addition, unless otherwise defined, all technical terms and scientific terms have the same meanings as those commonly understood by a person skilled in the art to which the present invention pertains. The terms used herein are only for effectively describing a certain exemplary embodiment, and not intended to limit the present invention.

In the present invention, unless explicitly described to the contrary, "comprising" any elements will be understood to imply further inclusion of other elements rather than the exclusion of any other elements.

In addition, the singular form used in the specification and claims appended thereto may be intended to also include a plural form, unless otherwise indicated in the context.

An embodiment of the present invention provides a method of producing a polymer composite material by a solution blending method including: adding an arylene ether-based polymer or an arylene ether imide-based polymer to a nanofiber dispersion in which an aramid nanofiber is dispersed in a polar aprotic solvent and dissolving the polymer therein.

Another embodiment of the present invention provides a method of producing a polymer composite material by an in-situ method including: mixing a monomer for preparing an arylene ether-based polymer or an arylene ether imide-based polymer with a nanofiber dispersion in which an aramid nanofiber is dispersed in a polar aprotic solvent and performing polymerization.

Still another embodiment of the present invention provides a polymer composite including an aramid nanofiber in a polymer selected from an arylene ether-based polymer or an arylene ether imide-based polymer, wherein the composite material has a tensile strength and a tensile elongation which are both increased by 110% or more as compared with a polymer including no aramid nanofiber. Specifically, the composite material has the tensile strength increase rate according to the following Calculation Formula 1 of 110% or more and the tensile elongation increase rate according to the following Calculation Formula 2 of 110% or more:

[Calculation Formula 1]

$$\frac{TS_1}{TS_0} \times 100$$

wherein $T_{S0}$ is a tensile strength (MPa) of an arylene ether-based polymer or an arylene ether imide-based polymer including no aramid nanofiber, and $T_{S1}$ is a tensile strength (MPa) of a composite material including the aramid nanofiber, the tensile strength being measured in accordance with ASTM D 638,

[Calculation Formula 2]

$$\frac{Te_1}{Te_0} \times 100$$

wherein $T_{e0}$ is a tensile elongation (%) of an arylene ether-based polymer or an arylene ether imide-based polymer including no aramid nanofiber, and $T_{e1}$ is a tensile elongation (%) of a composite material including the aramid nanofiber, the tensile elongation being measured in accordance with ASTM D 638.

In an embodiment, the composite resin may include 0.01 to 2 parts by weight of the aramid nanofiber, with respect to 100 parts by weight of the polymer.

In an embodiment, the polymer composite material may have both the tensile strength increase rate of 130% or

more and the tensile elongation increase rate of 140% or more.

Hereinafter, each constituent element of the present invention will be described in detail.

[Nanofiber dispersion]

In an embodiment of the present invention, the nanofiber dispersion may be obtained by dispersing an aramid bulk fiber, for example, a Kevlar fiber in a polar aprotic solvent. More specifically, the dispersion in which the aramid nanofiber is dispersed may be prepared by performing stirring in a state in which the aramid bulk fiber and a basic material are mixed with the polar aprotic solvent.

The aprotic polar solvent may be, specifically for example, any one or a mixture of two or more selected from dimethyl sulfoxide (DMSO), N-methyl-2-pyrrolidone (NMP), N,N-dimethylacetamide (DMAc), hexamethylphosphoramide (HMPA), N,N,N',N'-tetramethylurea (TMU), N,N-dimethylformamide (DMA), and the like.

The basic material may be, specifically, for example, a strong base such as potassium hydroxide and sodium hydroxide, but is not limited thereto.

In another embodiment of the present invention, the nanofiber dispersion may be prepared according to the preparation method of an aramid nanofiber dispersion of Korean Patent Application No. 10-2018-0057585 (May 21, 2018) previously filed by the present applicant. More specifically, the nanofiber dispersion may be prepared by including a step of performing stirring so that a nanofiber is derived, while dissolving or dispersing an aromatic polyamide-based polymer in a solution including a basic material and an aprotic polar solvent.

More specifically, the method of producing an aramid nanofiber dispersion may include: a step of performing stirring so that a nanofiber is derived, while dissolving or dispersing an aromatic polyamide-based polymer in a solution including a basic material and an aprotic polar solvent. The aramid nanofiber according to an exemplary embodiment is obtained by filtering the aramid nanofiber dispersion prepared by the preparation method, and has an average diameter of 1 to 100 nm and an average length of 0.1 to 100 $\mu$m. In addition, the aramid nanofiber may have a surface which is negatively charged, and is distinguished from a nanofiber prepared by electrospinning.

The aromatic polyamide-based polymer may be a purified polymer from which an organic solvent and a by-product used as a reaction raw material in the preparation of the polymer are removed, or a mixed composition from which the organic solvent and the by-product are not removed. The organic solvent included in the mixed composition may be used as a cosolvent in the preparation of the aramid nanofiber dispersion.

In the method for preparing an aramid nanofiber dispersion according to an embodiment, the nanofiber may be prepared while performing stirring until the aromatic polyamide-based polymer is completely dissolved or dispersed in a solution including a basic material and an aprotic polar solvent.

More specifically, the method for preparing an aramid nanofiber dispersion may include a step of performing stirring so that a nanofiber is derived while dissolving or dispersing an aromatic polyamide-based polymer in a solution including a basic material and an aprotic polar solvent. Here, the nanofiber may be formed by self-assembly in the process of dissolution or dispersion, and a sufficient time may be needed for producing a nanofiber. More specifically, the aromatic polyamide-based polymer is completely dissolved until the polymer is not seen with the naked eye, and is produced into the nanofiber by self-assembly to be dispersed in the solution. In addition, it is characterized that a time to allow self-assembly is imparted, but the time is minimized.

In addition, the term "self-assembly" is a term which comprehensively expresses a phenomenon that the aromatic polyamide-based polymer is dissolved or dispersed in the solvent to form the nanofiber.

The aprotic polar solvent used for preparing the nanofiber by dissolving the aromatic polyamide-based polymer may be, specifically, for example, any one or a mixed solvent of two or more selected from dimethyl sulfoxide (DMSO), N-methyl-2-pyrrolidone (NMP), N,N-dimethylacetamide (DMAc), hexamethylphosphoramide (HMPA), N,N,N',N'-tetramethyl urea (TMU), N,N-dimethylformamide (DMF), and the like. More specifically, for example, dimethyl sulfoxide (DMSO) may be used alone, or dimethyl sulfoxide (DMSO) is mixed with any one or two or more cosolvents selected from N-methyl-2-pyrrolidone (NMP), N,N-dimethylacetamide (DMAc), hexamethylphosphoramide (HMPA), N,N,N',N'-tetramethyl urea (TMU), N,N-dimethylformamide (DMF), and the like. By using the solvent in combination with the cosolvent, a time required to prepare the nanofiber, that is, a time required to dissolve the aromatic polyamide-based polymer until the polymer is not seen with the naked eye may be further reduced, as compared with the case of using dimethyl sulfoxide (DMSO) alone.

The basic material may be, specifically, for example, a strong base such as potassium hydroxide and sodium hydroxide, but is not limited thereto.

Stirring may be performed in order for the aromatic polyamide-based polymer to be dissolved better, and may be performed at a temperature of 50°C or lower, more specifically at a temperature of 10 to 50°C, and still more specifically at a temperature of 20 to 30°C. In addition, the stirring may be performed under the atmosphere of an inert gas such as nitrogen or argon, but is not limited thereto. The stirring may be performed at 10-1000 rpm, specifically 50-800 rpm, and more specifically 100-500 rpm, but is not limited thereto.

The aromatic polyamide-based polymer refers to a polymer in the form of a solid which is not spun into a fiber form. More specifically, the aromatic polyamide-based polymer may be an amorphous solid form which is not processed into a fiber form of 10 denier or less based on a single fiber.

An embodiment of the aromatic polyamide-based polymer may be obtained by polymerizing a polymerization composition including an organic solvent, an aromatic diamine, and an aromatic diacid-based compound, and then performing filtration and purification.

[Arylene ether-based polymer]

In an embodiment of the present invention, the arylene ether-based polymer is not particularly limited as long as it is a polymer having an arylene ether structure, and may be, for example, a polymer including repeating units of the following Chemical Formulae 1 to 7 without limitation:

[Chemical Formula 1]

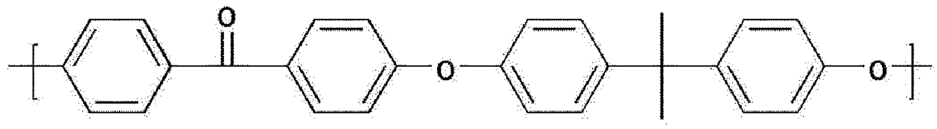

[Chemical Formula 2]

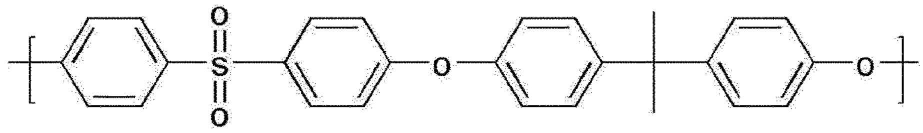

[Chemical Formula 3]

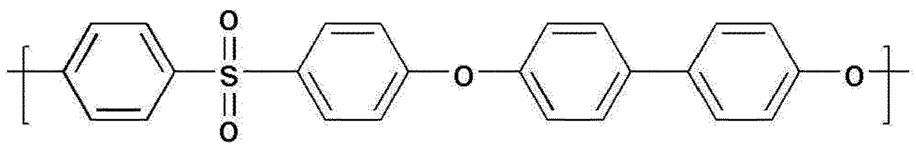

[Chemical Formula 4]

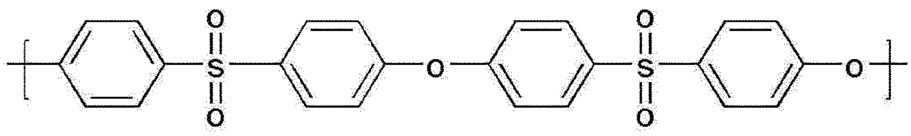

[Chemical Formula 5]

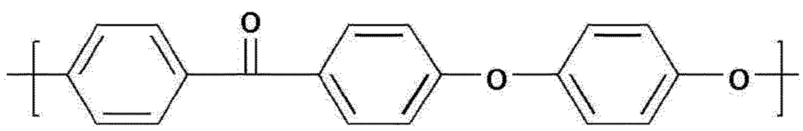

[Chemical Formula 6]

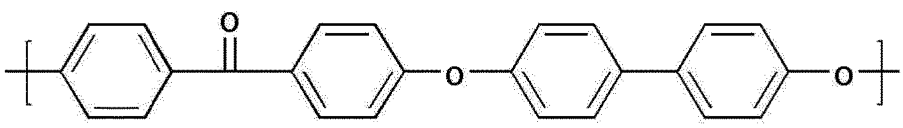

[Chemical Formula 7]

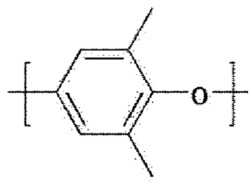

In an embodiment, a molecular weight of the arylene ether-based polymer is not particularly limited, but specifically, for example, a weight average molecular weight thereof may be 10,000 to 300,000 g/mol. A polymer having the weight average molecular weight in the above range may significantly improve a tensile strength and an elongation when the polymer is produced into a composite material with an aramid nanofiber.

[Arylene ether imide-based polymer]

In an embodiment of the present invention, the arylene ether imide-based polymer is not particularly limited as long as it is a polymer having an arylene ether imide-based structure, but may be, for example, a polymer including repeating units of the following Chemical Formulae 8 and 9 without limitation:

[Chemical Formula 8]

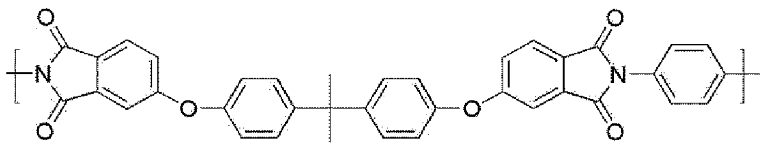

[Chemical Formula 9]

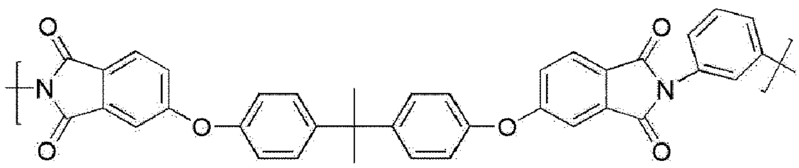

In an embodiment, a molecular weight of the arylene ether imide-based polymer is not particularly limited, but specifically, for example, a weight average molecular weight thereof may be 10,000 to 300,000 g/mol. A polymer having the weight average molecular weight in the above range may significantly improve a tensile strength and an elongation when the polymer is produced into a composite material with an aramid nanofiber.

[Solution blending method]

In an embodiment of the present invention, a method of producing a polymer composite material by a solution blending method may include:

a) adding an arylene ether-based polymer or an arylene ether imide-based polymer to a nanofiber dispersion in which an aramid nanofiber is dispersed in a polar aprotic solvent and dissolving the polymer therein; and
b) drying the solvent.

By drying the solvent, the composite material in a solid powder state may be obtained, and a process of melting and molding the composite material may be further included.

In step a), a method of dissolving the arylene ether-based polymer or the arylene ether imide-based polymer in the nanofiber dispersion is not particularly limited, but for example, a method such as ultrasonic dispersion and mechanical stirring may be used during mixing and dispersing.

As an embodiment, in step a), the nanofiber dispersion may have a solid content of 0.1 to 1 wt%. In addition, the

nanofiber dispersion may be used at 10 to 50 parts by weight with respect to 100 parts by weight of the polymer, and for further improving dispersibility, 500 to 1500 parts by weight of an additional polar aprotic solvent may be further added and mixed.

In an embodiment, the arylene ether-based composite material produced by the solution blending method may have a high increase effect of both the tensile strength increase rate according to the following Calculation Formula 1 of 110% or more, preferably 120% or more, and more preferably 140% or more, and the tensile elongation increase rate according to the following Calculation Formula 2 of 110% or more, preferably 120% or more, and more preferably 130% or more.

[Calculation Formula 1]

$$\frac{TS_1}{TS_0} \times 100$$

wherein $T_{S0}$ is a tensile strength (MPa) of an arylene ether-based polymer or an arylene ether imide-based polymer including no aramid nanofiber, and $T_{S1}$ is a tensile strength (MPa) of a composite material including the aramid nanofiber, the tensile strength being measured in accordance with ASTM D 638,

[Calculation Formula 2]

$$\frac{Te_1}{Te_0} \times 100$$

wherein $T_{e0}$ is a tensile elongation (%) of an arylene ether-based polymer or an arylene ether imide-based polymer including no aramid nanofiber, and $T_{e1}$ is a tensile elongation (%) of a composite material including the aramid nanofiber, the tensile elongation being measured in accordance with ASTM D 638.

In an embodiment, the polar aprotic solvent may be any one or a mixture of two or more selected from the group consisting of dimethyl sulfoxide (DMSO), dimethylacetamide (DMAc), dimethylformamide (DMF), methylpyrrolidone (NMP), sulfolane, N-cyclohexyl-2-methylpyrrolidone, and the like, but is not limited thereto.

In an embodiment, the aramid nanofiber is not particularly limited, but may have an average diameter of 1 to 200 nm, more preferably 3 to 100 nm. In addition, the aramid nanofiber may be a fiber having an average length of 0.05 to 200 μm, more preferably 0.1 to 100 μm, but is not limited thereto. When the aramid nanofiber in the above range is included, dispersibility is excellent and thus, when the aramid nanofiber is produced into the composite material with the arylene ether-based polymer, an effect of increasing mechanical physical properties, in particular a tensile strength and a tensile elongation is superior, which is thus preferred.

In an embodiment, the aramid nanofiber may be included at 0.0001 to 10 parts by weight with respect to 100 parts by weight of the polymer. The aramid nanofiber may be included at preferably 0.001 to 5 parts by weight, more preferably 0.01 to 2 parts by weight.

The aramid nanofiber in the present invention may be a nanofiber prepared in a nanoscale from a bulk fiber prepared by a conventional sulfation method in a polar aprotic solvent including or an aramid nanofiber, or an aramid nanofiber prepared by the method described in Korean Patent Application No. 10-2018-0057585 previously filed by the present inventors. Any one of the nanofibers prepared by the above methods may be used in the present invention, but when the aramid nanofiber is directly prepared from the polymer invented by the present inventors, a large amount of the aramid nanofiber may be obtained within a short time and a solution for preparing the aramid nanofiber itself may be used for solution blending with the arylene ether-based polymer.

[In-situ method]

Another embodiment of the present invention provides a method of producing an arylene ether-based polymer composite including: mixing an arylene ether-based or arylene ether imide-based polymerization monomer with a polar aprotic solution in which an aramid nanofiber is dispersed and performing polymerization to produce the composite by an in-situ method. The case of producing the composite material by the in-situ method refers to a process of producing a composite material by performing polymerization after mixing the arylene ether-based or arylene ether imide-based polymerization monomer with a polar aprotic solution in which the aramid nanofiber is dispersed, and since there is no need to dissolve a polymerized polymer separately, the composite material may be conveniently produced.

More specifically, the method may include:

i) preparing a mixture in which a monomer for preparing an arylene ether-based polymer or an arylene ether imide-based polymer is mixed with a nanofiber dispersion in which an aramid nanofiber is dispersed in a polar aprotic solvent; and
ii) polymerizing the mixture.

In an embodiment, as the monomer of step i), any monomer may be used without limitation, as long as it is a monomer for preparing an arylene ether-based polymer or an arylene ether imide-based polymer. Specifically, for example, examples of the monomer for preparing the arylene ether-based polymer include bisphenol-A and 4,4-difluorodiphenyl sulfone, but are not limited thereto. Examples of the monomer for preparing the arylene ether imide-based polymer include 2,2-bis[4-(3,4-dicarboxyphenoxy) phenyl) propane dianhydride and 1,4-phenylene diamine, but are not limited thereto.
As an embodiment, in step i), the nanofiber dispersion may have a solid content of 0.1 to 1 wt%. In addition, the nanofiber dispersion may be used at 10 to 50 parts by weight with respect to 100 parts by weight of the total content of the monomer, and for further improving dispersibility, 500 to 1500 parts by weight of an additional polar aprotic solvent may be further added and mixed.
In an embodiment, the polar aprotic solvent may be any one or a mixture of two or more selected from the group consisting of dimethyl sulfoxide (DMSO), dimethylacetamide (DMAc), dimethylformamide (DMF), methylpyrrolidone (NMP), sulfolane, N-cyclohexyl-2-methylpyrrolidone, and the like, but is not limited thereto.
In step ii), ultrasonic treatment may be performed before polymerization of the mixture to further improve dispersibility.
The polymerization may be performed according to a common polymerization method.
The composite material produced by the in-situ method may have a surprising increase effect of the tensile strength increase rate according to the following Calculation Formula 1 of 120% or more, preferably 160% or more, and more preferably 200 % or more, and the tensile elongation increase rate according to the following Calculation Formula 2 of 150% or more, preferably 170% or more, and more preferably 230 % or more.

[Calculation Formula 1]

$$\frac{TS_1}{TS_0} \times 100$$

wherein $T_{S0}$ is a tensile strength (MPa) of an arylene ether-based polymer or an arylene ether imide-based polymer including no aramid nanofiber, and $T_{S1}$ is a tensile strength (MPa) of a composite material including the aramid nanofiber, the tensile strength being measured in accordance with ASTM D 638,

[Calculation Formula 2]

$$\frac{Te_1}{Te_0} \times 100$$

wherein $T_{e0}$ is a tensile elongation (%) of an arylene ether-based polymer or an arylene ether imide-based polymer including no aramid nanofiber, and $T_{e1}$ is a tensile elongation (%) of a composite material including the aramid nanofiber, the tensile elongation being measured in accordance with ASTM D 638.
In an embodiment, the aramid nanofiber is not particularly limited, but may have an average diameter of 1 to 200 nm, more preferably 3 to 100 nm. In addition, the aramid nanofiber may be a fiber having an average length of 0.05 to 200 μm, more preferably 0.1 to 100 μm, but is not limited thereto. When the aramid nanofiber in the above range is included, dispersibility is excellent and thus, when the aramid nanofiber is produced into the composite material with the arylene ether-based polymer, an effect of increasing mechanical physical properties, in particular a tensile strength and a tensile elongation is superior, which is thus preferred.
In an embodiment, the aramid nanofiber may be included at 0.0001 to 10 parts by weight with respect to 100 parts by weight of the polymer. The aramid nanofiber may be included at preferably 0.001 to 5 parts by weight, more preferably 0.01 to 2 parts by weight.
Any one of the nanofibers prepared by the above methods may be used in the present invention, but when the

aramid nanofiber is directly prepared from the polymer invented by the present inventors, a large amount of the aramid nanofiber may be obtained within a short time, a solution for preparing the aramid nanofiber itself may be used for solution blending with the arylene ether-based polymer, and an arylene ether monomer may be added to the solution and dissolved therein to directly produce the composite material by the in-situ method, and thus, the aramid nanofiber is more preferred.

As another embodiment of the present invention, the arylene ether-based or arylene ether imide-based polymerization monomer may be mixed with the polar aprotic solution in which the aramid nanofiber is dispersed and polymerized by the in-situ method to produce the composite material, and also, an aramid nanofiber prepared beforehand may be dispersed in a mixed solution of the arylene ether-based or arylene ether imide-based monomer to produce the composite material.

As another embodiment of the present invention, when the arylene ether-based or arylene ether imide-based composite material is produced by the in-situ method in the polar aprotic solution in which the aramid nanofiber is dispersed, a molecular weight of the arylene ether-based or arylene ether imide-based polymer is not particularly limited, but specifically, for example, a weight average molecular weight may satisfy 10,000 to 300,000 g/mol, but is not limited thereto. When the composite material produced by the method including mixing the arylene ether-based or arylene ether imide-based polymerization monomer with the aramid nanofiber dispersion in the polar aprotic solution and performing polymerization as described above has the weight average molecular weight in the above range, the tensile strength and the tensile elongation of the composite material may be significantly improved.

When the arylene ether-based composite material is produced by the in-situ method, the tensile strength increase rate may satisfy 120% or more. Furthermore, when the arylene ether-based monomer is mixed with the polar aprotic solution in which the aramid nanofiber is dispersed and polymerized to produce the arylene ether-based composite material, the tensile strength increase rate may satisfy 160% or more, preferably 200% or more, which is thus more preferred.

In addition, the tensile elongation may satisfy preferably 140% or more, 160% or more, more preferably 200% or more, together with the increase in the tensile strength, which is thus more preferred.

Hereinafter, the present invention will be described in more detail with reference to the Examples and Comparative Examples. However, the following Examples and Comparative Examples are only an example for describing the present invention in detail, and do not limit the present invention in any way.

[Method of measuring physical properties]

(1) Tensile strength and tensile elongation

A tensile test was performed on the produced polymer composite material in accordance with ASTM D 638, using UTM 5942 (INSTRON) after performing melt injection into a dumbbell shape having a standard of ASTM D 638-Type 1. An average of 4 or more measured values was used as the resultant value.

For a tensile strength increase rate, an increase rate relative to the tensile strength of an arylene ether-based or arylene ether imide-based polymer corresponding to Comparative Example 1 was calculated by the following Calculation Formula 1:

[Calculation Formula 1]

$$\frac{TS_1}{TS_0} \times 100$$

wherein $T_{S0}$ is a tensile strength (MPa) of an arylene ether-based or an arylene ether imide-based polymer including no aramid nanofiber, and $T_{S1}$ is a tensile strength (MPa) of a composite material produced by adding the arylene ether-based or arylene ether imide-based polymer to a polar aprotic solution in which the aramid nanofiber is dispersed.

For a tensile elongation increase rate, an increase rate relative to the tensile elongation of an arylene ether-based or arylene ether imide-based polymer corresponding to Comparative Example 1 was calculated by the following Calculation Formula 2:

[Calculation Formula 2]

$$\frac{Te_1}{Te_0} \times 100$$

wherein $T_{e0}$ is a tensile elongation (%) of an arylene ether-based or an arylene ether imide-based polymer including no aramid nanofiber, and $T_{e1}$ is a tensile elongation (%) of an arylene ether-based or arylene ether imide-based polymer composite material including the aramid nanofiber.

(2) Weight average molecular weight and molecular weight distribution

As a weight average molecular weight, a weight in terms of standard polystyrene and a weight distribution were determined by performing measurement of gel transmission chromatography (GPC) equipped with a refractive index sensor using chloroform.

GPC equipment: ACQUITY APC available from Waters
Column: ACQUITY APC™ available from Waters
Column temperature: 30°C
Amount added: 50 μl
Flow rate: 0.62 ml/min

[Preparation Example 1] Preparation of nanofiber dispersion

2 g of an aramid bulk fiber (Kevlar), 3 g of KOH, and 1000 g of dimethyl sulfoxide (DMSO) were added to a 2500 ml dried glass and stirring was performed at 25°C for 180 hours. A nanofiber dispersion in which 0.2 wt% of the aramid nanofiber was dispersed was prepared. The aramid nanofiber in the prepared nanofiber dispersion had an average diameter of 20 nm and an average length of 30 μm.

[Preparation Example 2] Preparation of aramid nanofiber solid powder

The aramid nanofiber dispersion of Preparation Example 1 was precipitated in methanol, filtered, and vacuum-dried to obtain an aramid nanofiber solid powder.

[Preparation Example 3] Preparation of arylene ether-based polymer

51.6 g (0.226 mol) of bisphenol-A, 57.5 g (0.226 mol) of 4,4'-difluorodiphenyl sulfone, and 44.5 g (0.0322 mol) of potassium carbonate were added to a glass flask equipped with a mechanical stirrer and a Dean-Stark device. Subsequently, 3.0 g of 18-crown-6 having 0.05 molecular equivalents to bisphenol-A and 350 g of dimethyl sulfoxide (DMSO) were added and nitrogen purging was performed. The reaction mixture was subjected to ultrasonic treatment for 10 minutes, and then heated at 155°C for 4 hours. After polymerization, the reaction mixture was diluted with 200 ml of DMSO, cooled to room temperature, and precipitated in 1 L of a water/methanol mixture (50/50 vol%) containing 100 ml of acetic acid. For removing a residual additive, the solid was filtered, dissolved in N,N'-dimethylacetamide (DMSO), and precipitated again. The precipitated polymer was filtered, washed with deionized water and methanol, and vacuum-dried at 80°C for 12 hours. The weight average molecular weight was 122,000 g/mol and the molecular weight distribution was 2.02.

The polymer prepared for measuring the mechanical physical properties of the arylene ether-based polymer prepared above was melted at 270°C for 8 minutes, and then was molded into a specimen having a dumbbell shape having a length, a width, and a thickness of 63.50 mm, 9.53 mm, and 3.18 mm, respectively, using Haake™ Minijet (Thermo Scientific). A cylinder temperature was 300°C, an injection pressure was 500 bar, a charging time was 15 seconds, and a mold temperature was 230°C. The results of measuring the physical properties are listed in Table 1.

[Preparation Example 4] Preparation of arylene ether imide-based polymer

117.6 g (0.226 mol) of 2,2-bis[4-(3,4-dicarboxyphenoxy) phenyl] propane dianhydride, 24.4 g (0.226 mol) of 1,4-phenylene diamine, 410 g of N-methyl-2-pyrrolidone (NMP), and 10 mL of chlorobenzene were added to a stirring reactor having a reflux device under a nitrogen atmosphere.

The reaction mixture was heated at 190°C for 8 hours under a nitrogen atmosphere. Chlorobenzene was periodically removed by a Dean-stark trap, and additional dry chlorobenzene was added to accelerate a cyclodehydration reaction. After polymerization, the reaction mixture was diluted with 200 ml of NMP, cooled to room temperature, and precipitated in 10 L of a water/methanol mixture (50/50 vol%) containing 100 ml of acetic acid. The precipitated polymer was filtered, washed with deionized water and methanol, and vacuum-dried at 80°C for 12 hours. The weight average molecular weight was 62,000 g/mol and the molecular weight distribution was 2.01.

The polymer obtained above for measuring the mechanical physical properties of the arylene ether imide-based

polymer prepared above was melted at 370°C for 8 minutes, and then was molded into a specimen having a dumbbell shape having a length, a width, and a thickness of 63.50 mm, 9.53 mm, and 3.18 mm, respectively, using Haake™ Minijet (Thermo Scientific). A cylinder temperature was 400 °C, an injection pressure was 500 bar, a charging time was 15 seconds, and a mold temperature was 280°C. The results of measuring the physical properties are listed in Table **2.**

[Comparative Example 1]

0.05 g of the solid aramid nanofiber of Preparation Example 2, 100 g of the arylene ether-based polymer prepared in Preparation Example 3, and 10 g of dioctyl terephthalate were dissolved and dispersed in 1000 g of dimethylacetamide. Subsequently, each solution was dried in a convection oven at 100°C for 3 days. The dried solid powder was prepared under the same conditions of the specimen described in Preparation Example 3, and the physical properties were measured and are listed in Table **1.**

[Example 1]

An arylene ether-based composite material including 0.05 parts by weight of the aramid nanofiber with respect to 100 parts by weight of the polymer was produced by the solution blending method as described later.

100 g of the arylene ether-based polymer of Preparation Example 3, 10 g of dioctyl terephthalate, and 25 g of the nanofiber dispersion of Preparation Example 1 (0.05 g of the aramid nanofiber was dispersed) were dissolved in 1000 g of dimethylacetamide (DMAc). Subsequently, each solution was dried in a convection oven at 100°C for 3 days. The polymer prepared for measuring the mechanical physical properties of the arylene ether-based composite material prepared above was melted at 270°C for 8 minutes, and then was molded into a specimen having a dumbbell shape having a length, a width, and a thickness of 63.50 mm, 9.53 mm, and 3.18 mm, respectively, using Haake™ Minijet (Thermo Scientific). A cylinder temperature was 300°C, an injection pressure was 500 bar, a charging time was 15 seconds, and a mold temperature was 230°C. The specimen was used to measure the physical properties, which are listed in Table 1.

[Example 2]

A composite material was produced in the same manner as in Example 1, except that 0.2 parts by weight of the aramid nanofiber was included with respect to 100 parts by weight of the polymer. A specimen was prepared under the same conditions as Example 1, and the physical properties thereof were measured and are listed in Table 1.

[Example 3]

A composite material was produced in the same manner as in Example 1, except that 1 part by weight of the aramid nanofiber was included with respect to 100 parts by weight of the polymer, and a specimen was prepared under the same conditions as Example 1 and the physical properties thereof were measured and are listed in Table 1.

[Example 4]

An arylene ether-based composite material including 0.05 parts by weight of the aramid nanofiber with respect to 100 parts by weight of the polymer was produced by an in-situ method.

The composite material was produced in the same manner as in Preparation Example 3, except that a mixed solvent of 25 g of the nanofiber dispersion of Preparation Example 1 (0.05 g of the aramid nanofiber was dispersed) and 325 g of dimethyl sulfoxide (DMSO) was used as a polymerization solvent instead of 350 g of dimethyl sulfoxide (DMSO). Here, the polymer had the weight average molecular weight of 110,000 g/mol and the molecular weight distribution of 1.98.

After drying the composite material, a specimen for measuring the mechanical physical properties was prepared according to the melt-injection conditions of Preparation Example 3. During specimen preparation, 10 wt% of a dioctyl terephthalate plasticizer was added with respect to the weight of a dried composite material solid powder. The specimen was used to measure the physical properties, which are listed in Table 1.

[Example 5]

A composite material was produced in the same manner as in Example 4, except that 0.2 parts by weight of the aramid nanofiber was included with respect to 100 parts by weight of the polymer (weight average molecular weight: 100,500 g/mol, molecular weight distribution: 1.92). A specimen was prepared in the same manner as in Example 4, and the physical properties thereof were measured and are listed in Table 1.

[Example 6]

A composite material was produced in the same manner as in Example 4, except that 1 part by weight of the aramid nanofiber was included with respect to 100 parts by weight of the polymer (weight average molecular weight: 100,200 g/mol, molecular weight distribution: 1.88). A specimen was prepared in the same manner as in Example 4, and the physical properties thereof were measured and are listed in Table 1.

[Example 7]

An arylene ether imide-based composite material including 0.05 parts by weight of the aramid nanofiber with respect to 100 parts by weight of the polymer was produced by the solution blending method as described later.

100 g of the arylene ether imide-based polymer prepared in Preparation Example 4, 10 g of dioctyl terephthalate, and 25 g of the nanofiber dispersion of Preparation Example 1 (0.05 g of the aramid nanofiber was dispersed) were dissolved in 1000 g of N-methyl-2-pyrrolidone (NMP). Subsequently, the solution was dried in a convection oven at 150°C for 3 days. A specimen was prepared from the dried solid powder under the same specimen preparation conditions as those of Preparation Example 4 and was analyzed, and the results are listed in Table 2.

[Example 8]

An arylene ether imide-based composite material including 0.05 parts by weight of the aramid nanofiber with respect to 100 parts by weight of the polymer was produced by the in-situ method as follows.

The process of synthesizing the arylene ether imide-based polymer of Preparation Example 4 was followed, but a mixed solvent of 25 g of the nanofiber dispersion of Preparation Example 1 (0.05 g of the aramid nanofiber was dispersed) and 385 g of N-methyl-2-pyrrolidone (NMP) was used as a polymerization solvent instead of 410 g of N-methyl-2-pyrrolidone (NMP) as a polymerization solvent and the same polymerization process was performed (weight average molecular weight: 58,000 g/mol, molecular weight distribution: 1.98).

A specimen was prepared from the dried composite material solid powder under the same specimen preparation conditions as those of Preparation Example 4, and the physical properties thereof were measured and are listed in Table 2. 10 wt% of a dioctyl terephthalate plasticizer was added with respect to the weight of a dried composite material solid powder.

[Table 1]

| | Content (part by weight) | Tensile strength (MPa) | Tensile strength increase rate (%) | Elongation (%) | Elongation increase rate (%) |
|---|---|---|---|---|---|
| Preparation Example 3 | - | 45 | - | 13 | - |
| Example 1 | 0.05 | 52 | 115 | 15 | 115 |
| Example 2 | 0.2 | 58 | 129 | 17 | 131 |
| Example 3 | 1 | 63 | 141 | 16 | 123 |
| Example 4 | 0.05 | 61 | 135 | 20 | 154 |
| Example 5 | 0.2 | 78 | 173 | 30 | 231 |
| Example 6 | 1 | 96 | 213 | 22 | 169 |
| Comparative Example 1 | 0.05 | 30 | 67 | 3 | 23 |

[Table 2]

| | Content (part by weight) | Tensile strength (MPa) | Tensile strength increase rate (%) | Elongation (%) | Elongation increase rate (%) |
|---|---|---|---|---|---|
| Preparation Example 4 | - | 80 | - | 25 | - |
| Example 7 | 0.05 | 96 | 120 | 29 | 115 |
| Example 8 | 0.05 | 108 | 135 | 35 | 140 |

As shown in Tables 1 and **2,** it was found that both the tensile strength and the tensile elongation of the arylene ether-based or arylene ether imide-based polymer composite material including the aramid nanofiber according to the present invention were increased, and it was confirmed that the tensile strength and the tensile elongation were significantly increased as compared with the polymer including no aramid nanofiber. Furthermore, when 0.05 to 1 part by weight of the aramid nanofiber was included in the composite material with respect to 100 parts by weight of the arylene ether-based or arylene ether imide-based polymer, a better effect of increasing mechanical physical properties may be implemented.

In addition, when the arylene ether-based polymer is solution-blended in the solution in which the aramid nanofiber according to the present invention is dispersed or is produced into the composite material by the in-situ method, it was confirmed that the composite material has much higher mechanical physical properties such as a tensile strength and a tensile elongation than the composite material produced by melt-kneading a masterbatch composite in the aramid nanofiber powder prepared in the present invention.

Furthermore, when the arylene ether-based or arylene ether imide-based masterbatch composite was produced by the in-situ method from a monomer using a solution in which the aramid nanofiber according to the present invention is dispersed as a polymerization solvent, it was confirmed that the composite has a much better effect of increasing mechanical physical properties than the masterbatch composite produced by the solution blending method.

## Claims

**1.** A method of producing a polymer composite material selected from:

a solution blending method including adding an arylene ether-based polymer or an arylene ether imide-based polymer to a nanofiber dispersion in which an aramid nanofiber is dispersed in a polar aprotic solvent and dissolving the polymer therein; or

an in-situ method including mixing a monomer for preparing an arylene ether-based polymer or an arylene ether imide-based polymer with a nanofiber dispersion in which an aramid nanofiber is dispersed in a polar aprotic solvent and performing polymerization.

**2.** The method of producing a polymer composite material of claim 1, wherein the composite material has a tensile strength increase rate according to the following Calculation Formula 1 of 110% or more and a tensile elongation increase rate according to the following Calculation Formula 2 of 110% or more:

[Calculation Formula 1]

$$\frac{TS_1}{TS_0} \times 100$$

wherein $T_{S0}$ is a tensile strength (MPa) of an arylene ether-based polymer or an arylene ether imide-based polymer including no aramid nanofiber, and $T_{S1}$ is a tensile strength (MPa) of a composite material including the aramid nanofiber, the tensile strength being measured in accordance with ASTM D 638,

[Calculation Formula 2]

$$\frac{Te_1}{Te_0} \times 100$$

wherein $T_{e0}$ is a tensile elongation (%) of an arylene ether-based polymer or an arylene ether imide-based polymer including no aramid nanofiber, and $T_{e1}$ is a tensile elongation (%) of a composite material including the aramid nanofiber, the tensile elongation being measured in accordance with ASTM D 638.

**3.** The method of producing a polymer composite material of claim 1, wherein the arylene ether-based polymer includes repeating units of the following structures:

[Chemical Formula 1]

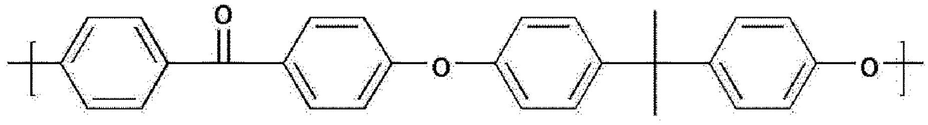

[Chemical Formula 2]

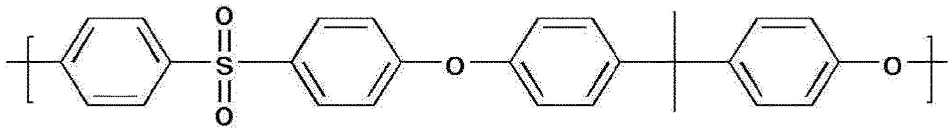

[Chemical Formula 3]

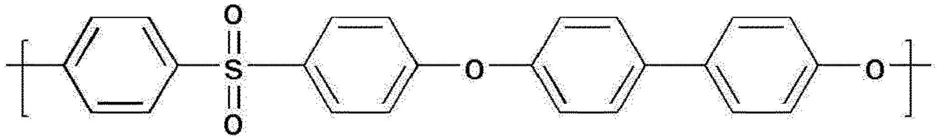

[Chemical Formula 4]

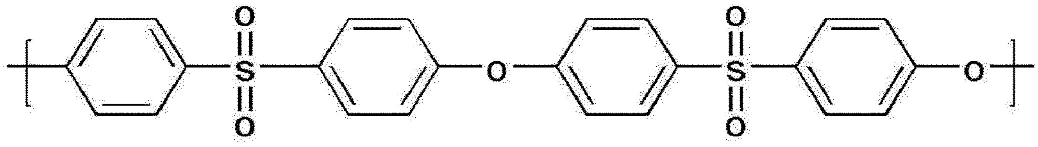

[Chemical Formula 5]

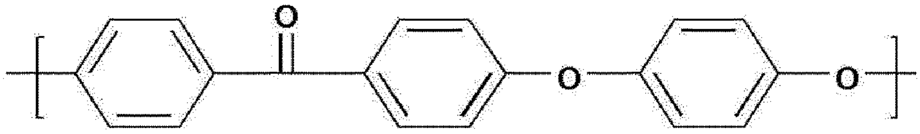

[Chemical Formula 6]

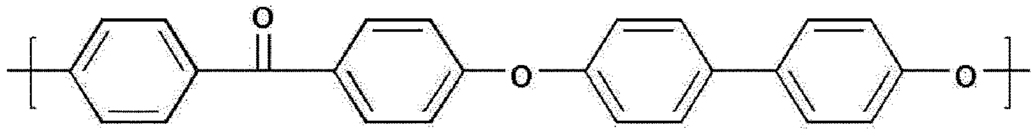

[Chemical Formula 7]

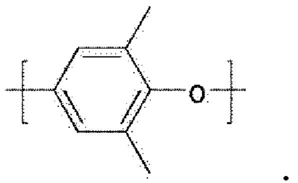

**4.** The method of producing a polymer composite material of claim 1, wherein the arylene ether imide-based polymer includes repeating units of the following structures:

[Chemical Formula 8]

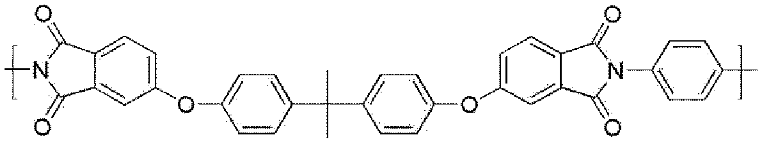

[Chemical Formula 9]

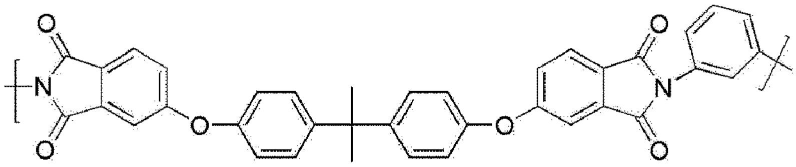

.

**5.** The method of producing a polymer composite material of claim 1, wherein the polar aprotic solvent is any one or a mixture of two or more selected from the group consisting of dimethyl sulfoxide, dimethylacetamide, dimethylformamide, methylpyrrolidone, sulfolane, and N-cyclohexyl-2-methylpyrrolidone.

**6.** The method of producing a polymer composite material of claim 1, wherein the aramid nanofiber has an average diameter of 3 to 100 nm and an average length of 0.1 to 100 μm.

**7.** The method of producing a polymer composite material of claim 1, wherein the aramid nanofiber is included at 0.01 to 2 parts by weight with respect to 100 parts by weight of a polymer forming the composite material.

**8.** The method of producing a polymer composite material of claim 1, wherein the nanofiber dispersion is prepared by including performing stirring so that a nanofiber is derived, while dissolving or dispersing an aromatic polyamide-based polymer in a solution including a basic material and an aprotic polar solvent.

**9.** The method of producing a polymer composite material of claim 8, wherein the stirring is performed at a temperature of 50°C or lower.

**10.** A polymer composite material comprising: an aramid nanofiber in a polymer selected from an arylene ether-based polymer or an arylene ether imide-based polymer,

wherein the composite material has a tensile strength increase rate according to the following Calculation Formula 1 of 110% or more and a tensile elongation increase rate according to the following Calculation Formula 2 of 110% or more:

[Calculation Formula 1]

$$\frac{TS_1}{TS_0} \times 100$$

wherein $T_{S0}$ is a tensile strength (MPa) of an arylene ether-based polymer or an arylene ether imide-based polymer including no aramid nanofiber, and $T_{S1}$ is a tensile strength (MPa) of a composite material including the aramid nanofiber, the tensile strength being measured in accordance with ASTM D 638,

[Calculation Formula 2]

$$\frac{Te_1}{Te_0} \times 100$$

wherein $T_{e0}$ is a tensile elongation (%) of an arylene ether-based polymer or an arylene ether imide-based polymer including no aramid nanofiber, and $T_{e1}$ is a tensile elongation (%) of a composite material including the aramid nanofiber, the tensile elongation being measured in accordance with ASTM D 638.

**11.** The polymer composite material of claim 10, wherein the aramid nanofiber is included at 0.01 to 2 parts by weight with respect to 100 parts by weight of a polymer forming the composite material.

**12.** The polymer composite material of claim 10, wherein the polymer composite has the tensile strength increase rate of 130% or more and the tensile elongation increase rate of 140% or more.

**Patentansprüche**

**1.** Verfahren zur Herstellung eines Polymerverbundmaterials, ausgewählt aus:

einem Lösungsmischverfahren, das das Hinzufügen eines Polymers auf Arylenetherbasis oder eines Polymers auf Arylenetherimidbasis zu einer Nanofaserdispersion, in der eine Aramid-Nanofaser in einem polaren aprotischen Lösungsmittel dispergiert ist, und das Auflösen des Polymers darin umfasst; oder
einem In-situ-Verfahren, das das Mischen eines Monomers zur Herstellung eines Polymers auf Arylenetherbasis oder eines Polymers auf Arylenetherimidbasis mit einer Nanofaserdispersion, in der eine Aramid-Nanofaser in einem polaren aprotischen Lösungsmittel dispergiert ist, und das Durchführen einer Polymerisation umfasst.

**2.** Verfahren zur Herstellung eines Polymerverbundmaterials nach 1, wobei das Verbundmaterial eine Zugfestigkeitssteigerungsrate gemäß der folgenden Berechnungsformel 1 von 110 % oder mehr und eine Zugdehnungssteigerungsrate gemäß der folgenden Berechnungsformel 2 von 110 % oder mehr aufweist:

[Berechnungsformel 1]

$$\frac{TS_1}{TS_0} \times 100$$

wobei $T_{S0}$ die Zugfestigkeit (MPa) eines Polymers auf Arylenetherbasis oder eines Polymers auf Arylenetherimidbasis ohne Aramid-Nanofaser ist und $T_{S1}$ die Zugfestigkeit (MPa) eines Verbundmaterials mit der Aramid-Nanofaser ist, wobei die Zugfestigkeit gemäß ASTM D 638 gemessen wird,

[Berechnungsformel 2]

$$\frac{Te_1}{Te_0} \times 100$$

wobei $T_{e0}$ die Zugdehnung (%) eines Polymers auf Arylenetherbasis oder eines Polymers auf Arylenetherimidbasis ist, das keine Aramid-Nanofasern enthält, und $T_{e1}$ die Zugdehnung (%) eines Verbundmaterials ist, das die Aramid-Nanofasern enthält, wobei die Zugdehnung gemäß ASTM D 638 gemessen wird.

**3.** Verfahren zur Herstellung eines Polymerverbundmaterials nach 1, wobei das Polymer auf Arylenetherbasis Wiederholungseinheiten der folgenden Strukturen enthält:

[Chemische Formel 1]

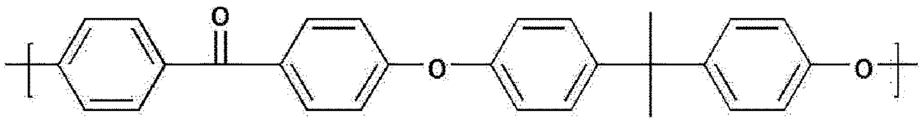

[Chemische Formel 2]

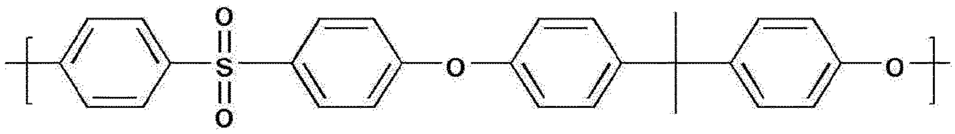

[Chemische Formel 3]

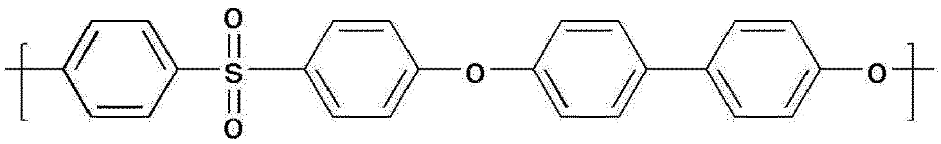

[Chemische Formel 4]

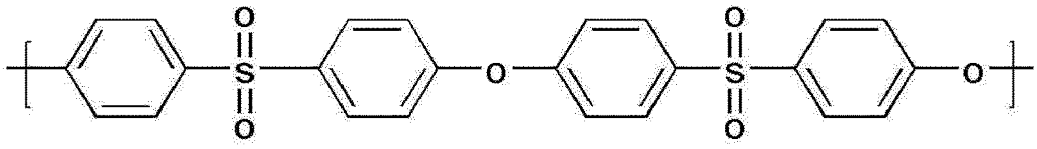

[Chemische Formel 5]

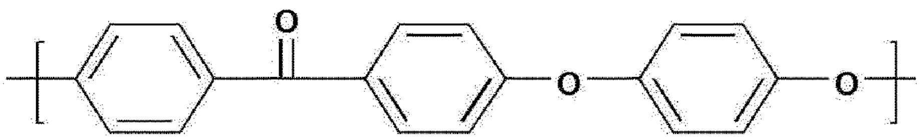

[Chemische Formel 6]

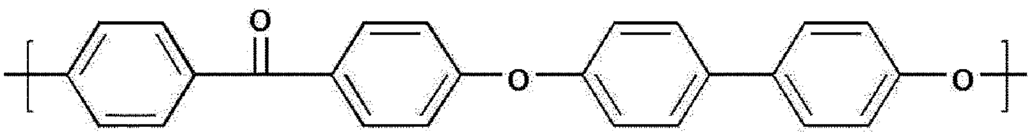

[Chemische Formel 7]

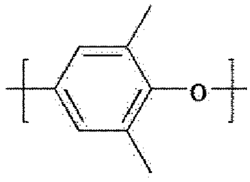

.

4. Verfahren zur Herstellung eines Polymerverbundmaterials nach 1, wobei das Polymer auf Arylenetherimid-Basis Wiederholungseinheiten der folgenden Strukturen enthält:

[Chemische Formel 8]

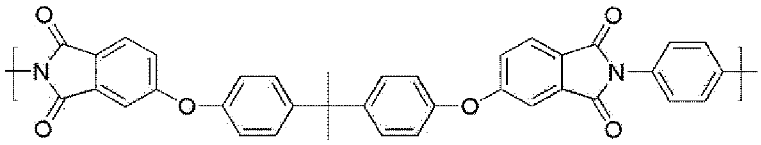

[Chemische Formel 9]

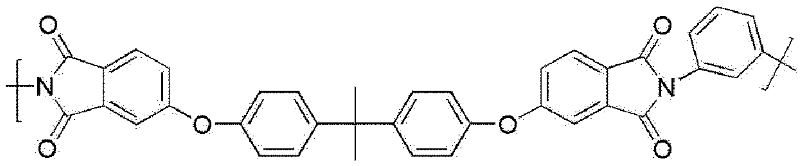

.

5. Verfahren zur Herstellung eines Polymerverbundmaterials nach 1, wobei das polare aprotische Lösungsmittel eines oder eine Mischung aus zwei oder mehr aus der Gruppe bestehend aus Dimethylsulfoxid, Dimethylacetamid, Dimethylformamid, Methylpyrrolidon, Sulfolan und N-Cyclohexyl-2-methylpyrrolidon ausgewählt ist.

6. Verfahren zur Herstellung eines Polymerverbundmaterials nach 1, wobei die Aramid-Nanofaser einen mittleren Durchmesser von 3 bis 100 nm und eine mittlere Länge von 0,1 bis 100 μm aufweist.

7. Verfahren zur Herstellung eines Polymerverbundmaterials nach 1, wobei die Aramid-Nanofaser in einer Menge von 0,01 bis 2 Gewichtsteilen, bezogen auf 100 Gewichtsteile eines das Verbundmaterial bildenden Polymers, enthalten ist.

8. Verfahren zur Herstellung eines Polymerverbundmaterials nach 1, wobei die Nanofaserdispersion hergestellt wird, indem gerührt wird, so dass eine Nanofaser entsteht, während ein Polymer auf Basis eines aromatischen Polyamids in einer Lösung, die ein basisches Material und ein aprotisches polares Lösungsmittel enthält, gelöst oder dispergiert wird.

9. Verfahren zur Herstellung eines Polymerverbundmaterials nach 8, wobei das Rühren bei einer Temperatur von 50 °C oder weniger durchgeführt wird.

10. Polymerverbundmaterial, umfassend: eine Aramid-Nanofaser in einem Polymer, ausgewählt aus einem Polymer auf Arylenether-Basis oder einem Polymer auf Arylenetherimid-Basis,

wobei das Verbundmaterial eine Zugfestigkeitssteigerungsrate gemäß der folgenden Berechnungsformel 1 von 110 % oder mehr und eine Zugdehnungssteigerungsrate gemäß der folgenden Berechnungsformel 2 von 110 % oder mehr aufweist:

[Berechnungsformel 1]

$$\frac{TS_1}{TS_0} \times 100$$

wobei $T_{S0}$ die Zugfestigkeit (MPa) eines Polymers auf Arylenetherbasis oder eines Polymers auf Arylenetherimidbasis ist, das keine Aramid-Nanofaser enthält, und $T_{S1}$ die Zugfestigkeit (MPa) eines Verbundmaterials ist, das die Aramid-Nanofaser enthält, wobei die Zugfestigkeit gemäß ASTM D 638 gemessen wird,

[Berechnungsformel 2]

$$\frac{Te_1}{Te_0} \times 100$$

wobei $T_{e0}$ die Zugdehnung (%) eines Polymers auf Arylenetherbasis oder eines Polymers auf Arylenetherimidbasis ist, das keine Aramid-Nanofasern enthält, und $T_{e1}$ die Zugdehnung (%) eines Verbundmaterials ist, das die Aramid-Nanofasern enthält, wobei die Zugdehnung gemäß ASTM D 638 gemessen wird.

**11.** Polymerverbundmaterial nach 10, wobei die Aramid-Nanofaser in einer Menge von 0,01 bis 2 Gewichtsteilen, bezogen auf 100 Gewichtsteile eines das Verbundmaterial bildenden Polymers, enthalten ist.

**12.** Polymerverbundmaterial nach 10, wobei der Polymerverbund eine Zugfestigkeitssteigerungsrate von 130 % oder mehr und eine Zugdehnungssteigerungsrate von 140 % oder mehr aufweist

## Revendications

**1.** Procédé de fabrication d'un matériau composite polymère choisi parmi :

un procédé de mélange en solution comprenant l'ajout d'un polymère à base d'éther d'arylène ou d'un polymère à base d'imide d'éther d'arylène à une dispersion de nanofibres dans laquelle une nanofibre d'aramide est dispersée dans un solvant aprotique polaire et la dissolution du polymère dans celle-ci ; ou
un procédé in situ comprenant le mélange d'un monomère destiné à la préparation d'un polymère à base d'éther d'arylène ou d'un polymère à base d'imide d'éther d'arylène avec une dispersion de nanofibres dans laquelle une nanofibre d'aramide est dispersée dans un solvant aprotique polaire, et la réalisation d'une polymérisation.

**2.** Procédé de fabrication d'un matériau composite polymère selon la revendication 1, dans lequel le matériau composite présente un taux d'augmentation de la résistance à la traction, selon la formule de calcul 1 ci-dessous, de 110 % ou plus, et un taux d'augmentation de l'allongement à la traction, selon la formule de calcul 2 ci-dessous, de 110 % ou plus :

[Formule de calcul 1]

$$\frac{TS_1}{TS_0} \times 100$$

où $T_{S0}$ est la résistance à la traction (MPa) d'un polymère à base d'éther d'arylène ou d'un polymère à base d'imide d'éther d'arylène ne contenant pas de nanofibre d'aramide, et $T_{S1}$ est la résistance à la traction (MPa) d'un matériau composite contenant une nanofibre d'aramide, la résistance à la traction étant mesurée conformément à la norme ASTM D 638,

[Formule de calcul 2]

$$\frac{Te_1}{Te_0} \times 100$$

où $T_{e0}$ est l'allongement à la traction (%) d'un polymère à base d'éther d'arylène ou d'un polymère à base d'imide d'éther d'arylène ne contenant pas de nanofibres d'aramide, et $T_{e1}$ est l'allongement à la traction (%) d'un matériau composite comprenant les nanofibres d'aramide, l'allongement à la traction étant mesuré conformément à la norme ASTM D 638.

**3.** Procédé de fabrication d'un matériau composite polymère selon la revendication 1, dans lequel le polymère à base d'éther d'arylène comprend des motifs répétitifs ayant les structures suivantes :

[Formule chimique 1]

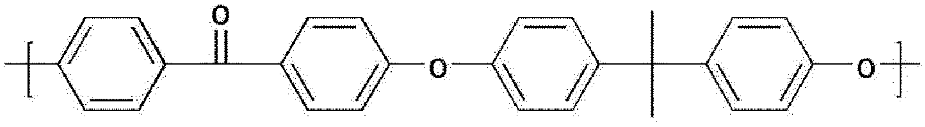

[Formule chimique 2]

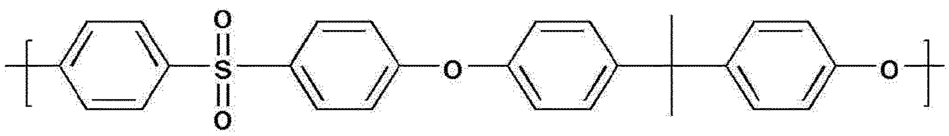

[Formule chimique 3]

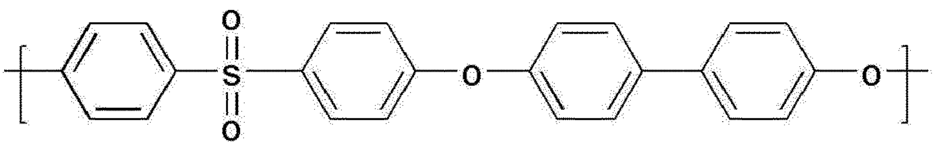

[Formule chimique 4]

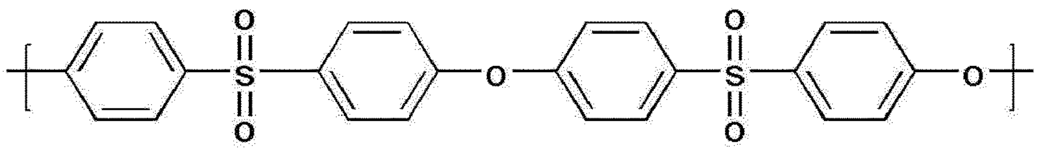

[Formule chimique 5]

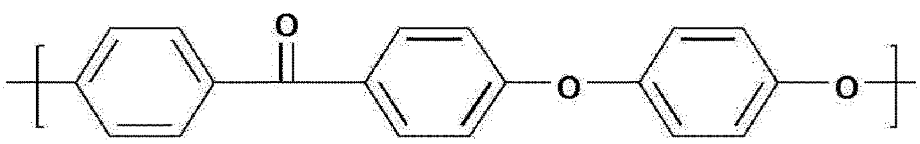

[Formule chimique 6]

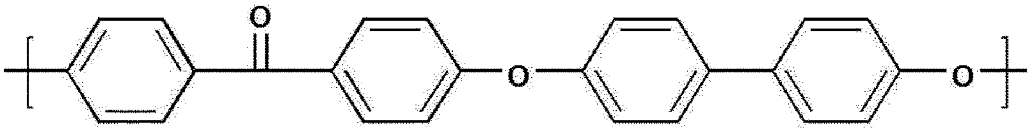

[Formule chimique 7]

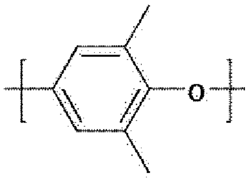

.

4. Procédé de fabrication d'un matériau composite polymère selon la revendication 1, dans lequel le polymère à base d'imide d'éther d'arylène comprend des motifs répétitifs ayant les structures suivantes :

[Formule chimique 8]

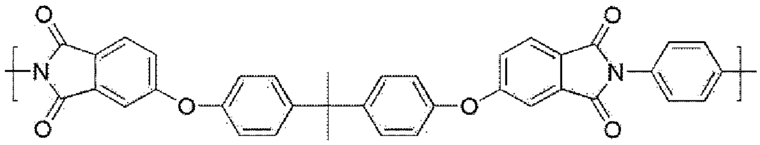

[Formule chimique 9]

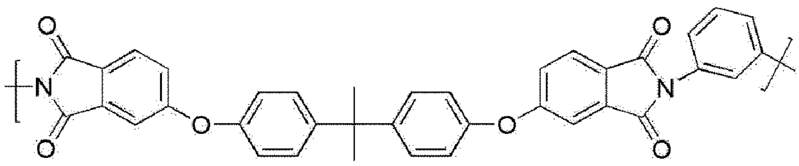

.

5. Procédé de fabrication d'un matériau composite polymère selon la revendication 1, dans lequel le solvant aprotique polaire est un composé quelconque ou un mélange de deux ou plusieurs composés choisis dans le groupe constitué par le diméthylsulfoxyde, le diméthylacétamide, le diméthylformamide, la méthylpyrrolidone, le sulfolane et la N-cyclohexyl-2-méthylpyrrolidone.

6. Procédé de fabrication d'un matériau composite polymère selon la revendication 1, dans lequel la nanofibre d'aramide a un diamètre moyen de 3 à 100 nm et une longueur moyenne de 0,1 à 100 μm.

7. Procédé de fabrication d'un matériau composite polymère selon la revendication 1, dans lequel la nanofibre d'aramide est incluse à raison de 0,01 à 2 parties en poids pour 100 parties en poids d'un polymère formant le matériau composite.

8. Procédé de fabrication d'un matériau composite polymère selon la revendication 1, dans lequel la dispersion de nanofibres est préparée en effectuant une agitation de manière à obtenir des nanofibres, tout en dissolvant ou en dispersant un polymère à base de polyamide aromatique dans une solution comprenant un matériau basique et un solvant polaire aprotique.

9. Procédé de fabrication d'un matériau composite polymère selon la revendication 8, dans lequel l'agitation est

effectuée à une température de 50 °C ou moins.

**10.** Matériau composite polymère comprenant : une nanofibre d'aramide dans un polymère choisi parmi un polymère à base d'éther d'arylène ou un polymère à base d'imide d'éther d'arylène,

dans lequel le matériau composite présente un taux d'augmentation de la résistance à la traction selon la formule de calcul 1 suivante de 110 % ou plus et un taux d'augmentation de l'allongement à la traction selon la formule de calcul 2 suivante de 110 % ou plus :

[Formule de calcul 1]

$$\frac{TS_1}{TS_0} \times 100$$

où $T_{S0}$ est une résistance à la traction (MPa) d'un polymère à base d'éther d'arylène ou d'un polymère à base d'imide d'éther d'arylène ne comprenant pas de nanofibre d'aramide, et $T_{S1}$ est une résistance à la traction (MPa) d'un matériau composite comprenant la nanofibre d'aramide, la résistance à la traction étant mesurée conformément à la norme ASTM D 638,

[Formule de calcul 2]

$$\frac{Te_1}{Te_0} \times 100$$

où $T_{e0}$ est l'allongement à la traction (%) d'un polymère à base d'éther d'arylène ou d'un polymère à base d'imide d'éther d'arylène ne contenant pas de nanofibre d'aramide, et $T_{e1}$ est l'allongement à la traction (%) d'un matériau composite contenant la nanofibre d'aramide, l'allongement à la traction étant mesuré conformément à la norme ASTM D 638.

**11.** Matériau composite polymère selon la revendication 10, dans lequel la nanofibre d'aramide est présente à raison de 0,01 à 2 parties en poids pour 100 parties en poids d'un polymère formant le matériau composite.

**12.** Matériau composite polymère selon la revendication 10, dans lequel le composite polymère présente un taux d'augmentation de la résistance à la traction de 130 % ou plus et un taux d'augmentation de l'allongement à la traction de 140 % ou plus

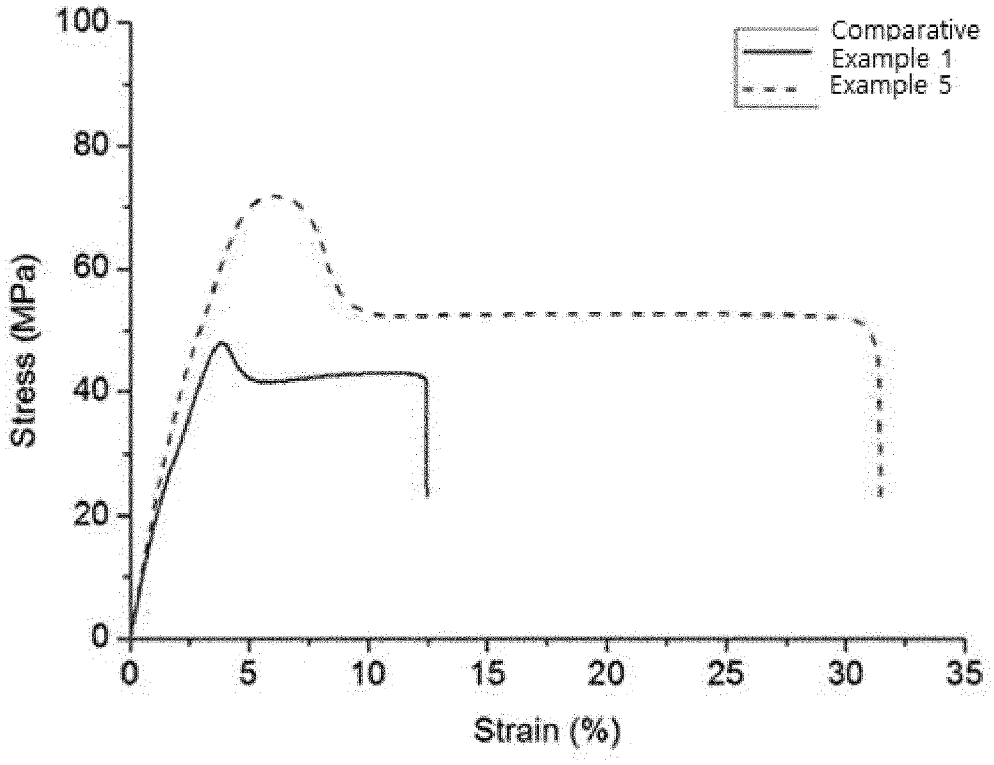
100
80
60
40
20
0
Stress (MPa)
0
5
10
15
20
25
30
35
Strain (%)
Comparative
Example 1
Example 5

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009051890 A
- WO 2015127115 A1
- US 2013288050 A1
- KR 1020180057585